# EUROPÄISCHE PATENTSCHRIFT

(11) **EP 2 107 077 B1**
(45) Veröffentlichungstag und Bekanntmachung des Hinweises auf die Patenterteilung: **25.01.2012**
(21) Anmeldenummer: 09153708.4
(22) Anmeldetag: 26.02.2009
(51) Int. Cl.: C08G 65/26, C08G 77/46

(54) **Organosiloxangruppen tragende Polyetheralkohole durch Alkoxylierung epoxidfunktioneller (Poly)Organosiloxane an Doppelmetallcyanid (DMC)-Katalysatoren, sowie Verfahren zu deren Herstellung**
Polyether alcohols containing organosiloxane groups by means of alkoxylation of epoxide-functional (poly)organosiloxanes on double metal cyanide (DMC) catalysts and method for their production
Alcools de polyéther porteurs de groupes organosiloxanes par alkoxylation de (poly)organosiloxanes à fonctions époxy sur des catalyseurs de cyanure métallique double (DMC) et leur procédé de fabrication

(30) Priorität: 01.04.2008 DE 102008000903
(43) Veröffentlichungstag der Anmeldung: 07.10.2009
(73) Patentinhaber: Evonik Goldschmidt GmbH, 45127 Essen (DE)
(72) Erfinder: Schubert, Dr. Frank, 47506, Neukirchen-Vluyn (DE); Knott, Dr. Wilfried, 45355, Essen (DE)

(56) Entgegenhaltungen:
- EP-A- 0 573 864
- EP-A- 1 947 134
- US-A- 5 719 249
- US-A- 5 880 245

## Beschreibung

Die Erfindung betrifft neue Organosiloxangruppen tragende Polyetheralkohole durch Alkoxylierung epoxidfunktioneller (Poly)Organosiloxane an DMC-Katalysatoren, sowie Verfahren zu deren Herstellung.

Konventionelle Polyetheralkohole, oft auch kurz einfach als Polyether bezeichnet und vorwiegend aus Propylenoxid und Ethylenoxid aufgebaut, sind seit langem bekannt und werden in großen Mengen technisch hergestellt. Sie dienen unter Anderem durch Umsetzung mit Polyisocyanaten als Ausgangsverbindungen zur Herstellung von Polyurethanen oder aber auch zur Herstellung von Tensiden.

Die meisten Verfahren zur Herstellung von Alkoxylierungsprodukten (Polyethern) bedienen sich basischer Katalysatoren wie z.B. der Alkalihydroxide und der Alkalimethylate.

Besonders verbreitet und seit vielen Jahren bekannt ist der Einsatz von KOH. Typischerweise wird ein meist niedermolekularer hydroxy-funktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Durch Umlagerung von Propylenoxid in Allylalkohol, der seinerseits als Kettenstarter fungiert und Kettenabbruchreaktionen entstehen Polyether mit relativ breiter Molmassenverteilung und ungesättigten Nebenprodukten. Insbesondere mit Allylalkohol als Startalkohol bringt die unter alkalischer Katalyse durchgeführte Alkoxylierungsreaktion auch Propenylpolyether hervor. Diese Propenylpolyether erweisen sich bei der hydrosilylierenden Weiterverarbeitung zu SiC-gestützten Siliconpolyether-Copolymeren als unreaktive Beiprodukte und sind zudem - durch die hydrolytische Labilität der in ihnen enthaltenen Vinyletherbindung und Freisetzung von Propionaldehyd - unerwünschte - Quelle olfaktorischer Produktbelastungen. Dies ist beispielsweise in der EP-A-1431331 beschrieben.

Zu den Nachteilen der basisch katalysierten Alkoxylierung zählt zweifelsfrei auch die Notwendigkeit, die erhaltenen Reaktionsprodukte mit Hilfe eines Neutralisationsschrittes von der aktiven Base zu befreien. Zwingend erforderlich sind dann die destillative Abtrennung des bei der Neutralisation entstehenden Wassers sowie die Abtrennung des gebildeten Salzes durch Filtration.

Neben der basenkatalysierten Reaktion sind auch saure Katalysen zur Alkoxylierung bekannt. So wird in DE 102004007561 die Verwendung von HBF₄ und von LewisSäuren wie z.B. BF₃, AlCl₃ und SnCl₄ in der Alkoxylierungstechnologie beschrieben.

Als nachteilig bei der säurekatalysierten Polyethersynthese erweist sich die mangelhafte Regioselektivität bei der Ringöffnung unsymmetrischer Oxirane wie z.B. Propylenoxid, die dazu führt, dass in nicht eindeutig zu steuernder Weise Polyoxyalkylenketten mit teils sekundären und primären OH-Termini erhalten werden. Wie im Falle der basenkatalysierten Alkoxylierungsreaktion ist auch hier eine Aufarbeitungssequenz von Neutralisation, Destillation und Filtration unabdingbar. Wird Ethylenoxid als Monomer in die säurekatalysierte Polyethersynthese eingebracht, so ist mit der Bildung von Dioxan als unerwünschtem Nebenprodukt zu rechnen.

Säure- und/oder Base-labile Stoffsysteme können unter den dargelegten Bedingungen jedoch keinesfalls erfolgreich alkoxyliert werden. In besonderem Maße trifft das auf Organokieselsäurederivate wie (Poly)Organosiloxane zu, die eine ausgeprägte Tendenz zur Säure- bzw. Basen-induzierten Hydrolyse und Umlagerung des Siloxangerüsts zeigen. Dieses ist umso mehr von Bedeutung, als dass sowohl die Säure- als auch Basen-induzierte Alkoxylierungsreaktion üblicherweise einer im wässrigen Medium nachgeschalteten Aufarbeitung bedürfen (Neutralisation, Salzabtrennung, Destillation zur Entfernung des Wassers).

Bei der Herstellung der wirtschaftlich bedeutsamen Klasse der Siliconpolyether bedient man sich nach heutigem Stand der Technik und in Ermangelung eines geeigneten Verfahrens zur direkten Alkoxylierung von organomodifizierten (Poly)Siloxanen einer zweistufigen Prozessführung. Ein zuvor durch Alkoxylierung von endständig ungesättigten Alkoholen wie Allylalkohol hergestellter, pHneutraler Polyether wird in einer anschließenden Hydrosilylierungsreaktion in Gegenwart eines Edelmetall-Katalysators unter Si-C-Verknüpfung an ein ein- oder mehrfach Si-H-funktionelles (Poly)Siloxan addiert. Üblicherweise wird in der Hydrosilylierung der Polyether bzw. das Polyethergemisch in einem deutlichen stöchiometrischen Überschuss von meist 20-35 % bezogen auf die Si-H-Funktionen der Siloxankomponente eingesetzt, um im Falle der Hydrosilylierung von Allylpolyethern unvermeidbare Allyl-Propenyl-Umlagerungen zu berücksichtigen und einen vollständigen Umsatz aller Si-H-Gruppen mit den Doppelbindungen der Polyether zu gewährleisten. Dies bedeutet in der Praxis, dass in den nach heutigem Stand der Technik hergestellten Siliconpolyethern unvermeidbar größere Mengen an unreagierten und umgelagerten Überschusspolyethern enthalten sind, die die Konzentration der tensidisch wirksamen Siliconpolyether herabsetzen und die anwendungstechnischen Eigenschaften der Zielprodukte beeinträchtigen. Das Verfahrensprinzip der Hydrosilylierung zu Siliconpolyethern, die auf Grund ihrer grenzflächenaktiven Eigenschaften je nach Zusammensetzung z.B. als Polyurethanschaumstabilisatoren, Entschäumer, Netzmittel oder auch als Dispergieradditive vielfältigen Einsatz finden, ist in verschiedenen Ausführungsformen in der Patentliteratur beschrieben, z.B. in EP-A1-0585771, EP-A1-0600261, EP-A1-0867460, EP-A1-0867461, EP-A1-0867462, EP-A1-0867464 und EP-A1-0867465.

Es fehlt bis heute ein Syntheseverfahren, dass es gestattet, Siliconpolyether, vielfach auch Polyethersiloxane genannt, in nur einem einfachen Verfahrensschritt durch eine direkte Alkoxylierungsreaktion aus epoxid-funktionellen (Poly)Organosiloxanen herzustellen. Aufgabe der vorliegenden Erfindung ist es daher, den geschilderten Mangel des Standes der Technik zu überwinden und sowohl neue Siliconpolyetherstrukturen als auch ein neues Alkoxylierungsverfahren zur Herstellung dieser Siliconpolyether bereitzustellen. Weiteres Ziel ist es, ein Verfahren zur Verfügung zu stellen, das es ermöglicht, Siliconpolyether mit erhöhtem, nahezu hundertprozentigem tensidischem Wirkstoffanteil, also ohne den bisher unvermeidbaren Polyetherüberschuss herzustellen.

Im Rahmen dieser Erfindung werden die erfindungsgemäßen Produkte vereinfachend als Siliconpolyether, Siloxan-Polyether-Copolymere oder Polyethersiloxane und/oder deren Derivate bezeichnet, auch wenn das Verfahren Substanzen, bedingt durch die möglichen Reaktionspartner, mit deutlich darüber hinaus gehender vielfältiger Funktionalität und Strukturvariabilität liefert. Allen Produkten ist jedoch gemein, dass mindestens eine endständige OH-Gruppe gebildet wird.

Erstaunlicherweise wurde nun gefunden, dass man Epoxidfunktionen tragende (Poly)Organosiloxane in vorteilhafter und einfacher Weise in Gegenwart bekannter Doppelmetallcyanidkatalysatoren, auch als DMC-Katalysatoren bekannt, alkoxylieren kann, ohne dass unter den Reaktionsbedingungen die für diese Stoffgruppe charakteristische Neigung zu unerwünschten Nebenreaktionen wie Hydrolyse-, Kondensations- oder Umlagerungsreaktionen beobachtet wird.

Mit dem erfindungsgemäß beanspruchten Verfahren erschließt sich erstmals und in sehr einfacher und reproduzierbarer Weise die Möglichkeit der von einem Starter mit reaktivem Wasserstoff ausgehenden alkoxylierenden Polymerisation von Epoxidgruppen tragenden (Poly)-Organosiloxanen zu Siliconpolyethern. Das erfindungsgemäß beanspruchte Verfahren gewährt die synthetische Flexibilität, neben epoxid-funktionellen (Poly)-Organosiloxanen weitere Epoxidverbindungen wie Alkylenoxide und Glycidylverbindungen sowie bei Bedarf weitere Typen von Monomeren sowohl terminal, als auch isoliert, blockartig kumuliert als aber auch statistisch verteilt in die Polymerkette eines Siliconpolyethers einzubauen.

Damit ermöglicht das erfindungsgemäße Verfahren den Zugang zu funktionalisierten Poly(Organo)Siloxanen, oder Polyethersiloxan-Copolymeren, die frei von Überschusspolyethern sind.

Das Reaktionsprodukt des erfindungsgemäßen Verfahrens ist somit frei von den bislang unweigerlich vorhandenen Resten an Edukten, den Polyethern (Überschusspolyether).

Die im Rahmen der Erfindung einsetzbaren epoxid-funktionellen (Poly)Organosiloxane werden meist durch eine Hydrosilylierungsreaktion unter Addition der entsprechenden Organowasserstoffsiloxane an endständig ungesättigte Epoxidverbindungen wie beispielsweise Allylglycidylether gewonnnen und sind im industriellen Maßstab erhältlich. Ein im Prozess evtl. eingesetzter molarer Allylglycidyletherüberschuss wird beim Herstellprozess abschließend destillativ entfernt. Derart gewonnene funktionelle Siloxanverbindungen sind dank ihrer reaktiven Epoxidgruppen wertvolle Synthesebausteine und Zwischenprodukte für verschiedene Folgeumsetzungen.

So wird in der Literatur beispielsweise die Verwendung von Epoxidgruppen tragenden Organosiloxanen zur ringöffnenden thermisch initiierten Photopolymerisation (Yasumasa Morita et. al., J. Appl. Polym. Sci. 2006, 100(3), 2010-2019) mittels Hexafluoroantimonat-Katalysatoren und die kationische Photopolymerisation (Ricardo Acosta Ortiz et. al., Polymer (2005), 46 (24), 10663-10671) beschrieben. In FR-2842098 wird der Einsatz von Epoxy-Siliconverbindungen als Bestandteil von reaktiven Mischungen zur kationisch und UV-initiierten Härtung von Dentalzementen erwähnt. Weitere Schriften, in denen unterschiedliche Varianten der Photopolymerisation genannt werden, sind WO-2003076491, WO-2002051357 und Sang Yong Pyun et. al., Macromolecular Research (2003), 11(3), 202-205.

Auf Grund Ihrer Basen- und Säureempfindlickeit sind epoxid-funktionelle Siloxanverbindungen völlig ungeeignet für eine herkömmliche alkalisch oder sauer katalysierte Polymerisation zu Alkoxylierungsprodukten. Erstaunlicherweise wurde nun gefunden, dass Epoxidfunktionen tragende (Poly)Organosiloxane sehr wohl alkoxyliert werden können, wenn als Katalysatoren Doppelmetallcyanidkatalysatoren, auch als DMC-Katalysatoren bekannt, verwendet werden.

Die für das erfindungsgemäß beanspruchte Verfahren eingesetzten Doppelmetallcyanidkatalysatoren (DMC-Katalysatoren) sind in ihrer Herstellung und Verwendung als Alkoxylierungskatalysatoren seit den 1960er Jahren bekannt und werden zum Beispiel in US-3,427,256, US-3,427,334, US-3,427,335, US-3,278,457, US-3,278,458 oder US-3,278,459 dargestellt. Unter den in den Folgejahren weiter entwickelten und z.B. in US-5,470,813 und US-5,482,908 beschriebenen, immer wirksameren Typen von DMC-Katalysatoren befinden sich im speziellen Zink-Cobalt-Hexacyanokomplex. Dank ihrer außerordentlich hohen Aktivität werden zur Herstellung von Polyetherolen nur geringe Katalysatorkonzentrationen benötigt, so dass auf die für konventionelle alkalische Katalysatoren notwendige Aufarbeitungsstufe - bestehend aus der Neutralisation, der Fällung und der Abfiltration des Katalysators - am Ende des Alkoxylierungsprozesses verzichtet werden kann. Auf die hohe Selektivität der DMC-katalysierten Alkoxylierung ist zurückzuführen, dass zum Beispiel Propylenoxid-basierende Polyether nur sehr geringe Anteile ungesättigter Nebenprodukte enthalten.

Die erfindungsgemäßen Polyethersiloxane weisen Strukturen der Formel (VI) auf , 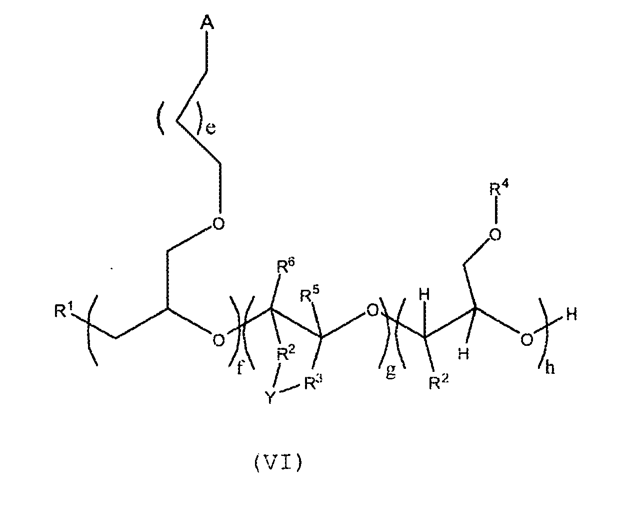 wobei das Fragment A dem Strukturelement der Formel (VIa) 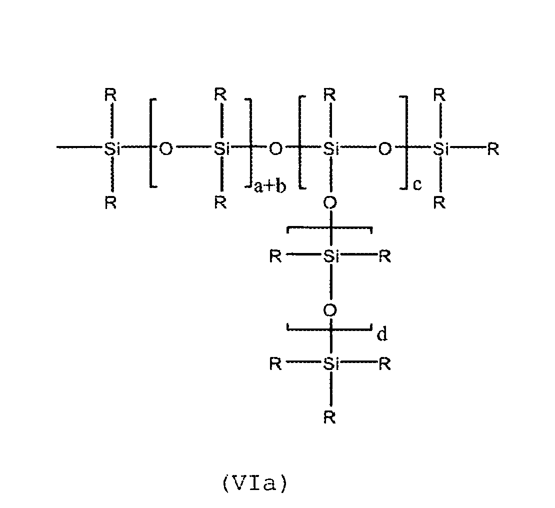 oder dem Strukturelement gemäß Formel(VIb) 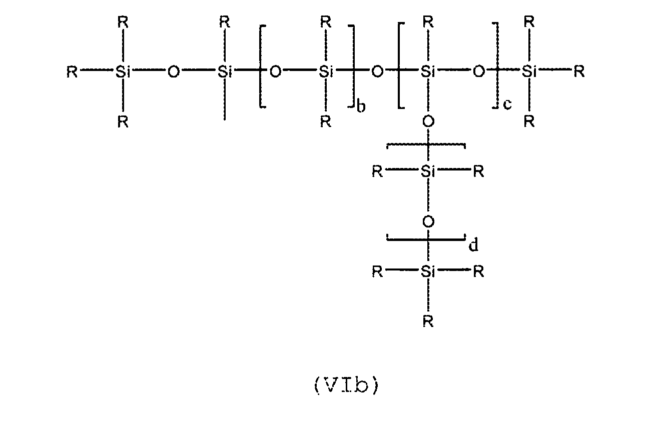 entspricht und
R einem oder mehreren gleichen oder verschiedenen Resten, ausgewählt aus linearen oder verzweigten, gesättigten, einfach oder mehrfach ungesättigten Alkyl-, Aryl-, Alkylaryl- oder Arylalkylresten mit 1 bis 40 Kohlenstoffatomen, Halogenalkylgruppen mit 1 bis 20 Kohlenstoffatomen,
R¹ einem gesättigten oder ungesättigten, gegebenenfalls verzweigten Rest, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine einfach oder mehrfach annelierte aromatische Gruppe, an die eine phenolische OH-Gruppe direkt gebunden ist, entspricht,
R² oder R³, sowie oder gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einemeinwertigen Kohlenwasserstoffrest sind, wobei der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Rest mit 1 bis 20 Kohlenstoffatomen, die Kohlenwasserstoffreste R² und R³ können ihrerseits weiter substituiert sein und funktionelle Gruppen wie Halogene, Hydroxylgruppen oder Glycidyloxypropylgruppen tragen,
R⁴ eine Ether- oder Esterfunktion, die an einen linearen oder verzweigten Alkylrest von bis 24 Kohlenstoffatomen, einen aromatischen oder cycloaliphatischen Rest gebunden ist,
und unabhängig voneinander
- a: eine ganze Zahl von 0 bis 5,
- b: eine ganze Zahl von 0 bis 500,
- c: eine ganze Zahl von 0 bis 50,
- d: eine ganze Zahl von 0 bis 200,
- e: eine ganze Zahl von 0 bis 18 ist, und
die durch die Indices a, b und c gekennzeichneten Strukturelemente in der Siloxanstruktur beliebig permutierbar sind und sowohl statistisch verteilt als auch blockartig vorliegen können,
- f: eine ganze Zahl von 1 bis 200 ist,
- g: eine ganze Zahl bis 10.000 ist,
- h: eine ganze Zahl von 0 bis 1.000 ist,
mit der Maßgabe, dass die Fragmente mit den Indices f, g und h untereinander frei permutierbar und damit in der Sequenz innerhalb der Polyetherkette gegeneinander austauschbar sind und die verschiedenen Monomereinheiten mit den Indexzahlen f, g und h untereinander blockweise aufgebaut sind oder aber auch einer statistischen Verteilung unterliegen können,
mit der Maßgabe, dass das Fragment mit dem Index g in einem molaren Überschuss gegenüber dem Fragment mit dem Index f vorhanden ist, wobei Polyethersiloxane frei von Überschusspolyethern sein können und/oder die Polyethersiloxane frei von Verbindungen der Formel (VI) mit f gleich Null sind.

Die erfindungsgemäßen Polyethersiloxane können nach dem erfindungsgemäßen Verfahren hergestellt werden.

Das erfindungsgemäße Verfahren zur Herstellung der erfindungsgemäßen Polyethersiloxane durch alkoxylierende Polymerisation von Epoxidgruppen tragenden (Poly)Organosiloxanen ausgehend von einem Starter R¹-H (V) mit reaktivem Wasserstoff mittels DMC-Katalyse zeichnet sich dadurch aus, dass als epoxid-funktionelle (Poly)Organosiloxane Verbindungen der allgemeinen Formel (I)eingesetzt werden 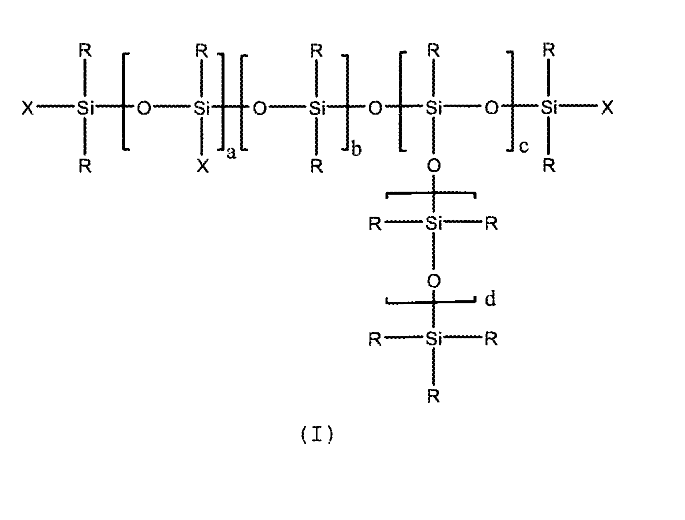 wobei
- R: einem oder mehreren gleichen oder verschiedenen Resten, ausgewählt aus linearen oder verzweigten, gesättigten, einfach oder mehrfach ungesättigten Alkyl-, Aryl-, Alkylaryl- oder Arylalkylresten mit 1 bis 40 Kohlenstoffatomen, Halogenalkylgruppen mit 1 bis 20 Kohlenstoffatomen, und
- X: unabhängig voneinander entweder R oder einem Epoxidgruppen tragenden Fragment der Formel (II) 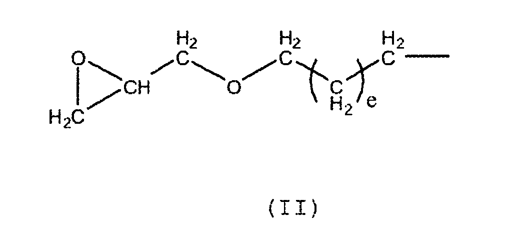 entspricht und unabhängig voneinander
a eine ganze Zahl von 0 bis 5,
b eine ganze Zahl von 0 bis 500,
c eine ganze Zahl von 0 bis 50,
d eine ganze Zahl von 0 bis 200,
e eine ganze Zahl von 0 bis 18 ist, und
die durch die Indices a, b und c gekennzeichneten Strukturelemente in der Siloxanstruktur beliebig permutierbar sind und sowohl statistisch verteilt als auch blockartig vorliegen können,
mit der Maßgabe, dass epoxid-funktionelle (Poly)Organosiloxane Verbindungen der allgemeinen Formel (I) solche eingesetzt werden, bei denen der Rest X nur in einem Fall dem Fragment (II) entspricht und ansonsten äquivalent zum Rest R ist,
wobei ein oder mehrere epoxidfunktionelle Siloxanmonomere gemäß Formel (I) einzeln oder im Gemisch mit weiteren Epoxidverbindungen der Formeln (III) 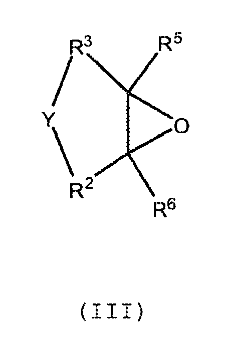 oder (IV) 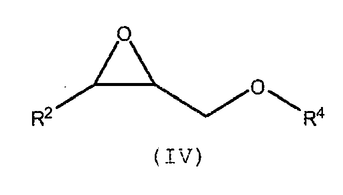 bei denen mindestens eine Glycidyloxypropyl-Gruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist,
wahlweise blockartig oder statistisch an einen Kettenstarter der Formel (V) mit mindestens einem reaktivem Wasserstoff addiert werden und die mindestens ein Epoxidgruppe tragenden Organcsiloxanmonomer beliebig in die Polymerkette eingestreut aufweisen oder auch kettenendständig im Polymergerüst angeordnet tragen.

Der Stand der Technik referiert verschiedene Alkoxylierungsverfahren, die sich der Katalyse mit Doppelmetallcyanid-Katalysatoren bedienen. Als Referenz sei hier z. B. auf EP-A1-1017738, US-5,777,177, EP-A1-0981407, WO-2006/002807 und EP-A-1474464 verwiesen.

Überraschenderweise wurde gefunden, dass nicht nur konventionelle Alkylenoxide wie Ethylenoxid, Propylenoxid und 1,2-Butylenoxid, sondern auch die für ihre Alkali- und Säureempfindlichkeit bekannten epoxidfunktionellen Organosiloxane der Formel (I) in Gegenwart von DMC-Katalysatoren auf einfache Weise alkoxyliert werden können. Die Polymerisation solcher substituierter Siloxanverbindungen geschieht unter den Bedingungen der DMC-Katalyse selektiv und so schonend, dass sich mit dem erfindungsgemäßen Verfahren die Möglichkeit erschließt, eine neue erfindungsgemäße Produktklasse von ein- und mehrfach Alkoxysiloxan-modifizierten Polyoxyalkylenverbindungen unter Erhalt der hydrolyseempfindlichen und zu Umlagerungen neigenden Organosiloxanstruktur herzustellen.

Es wird somit ein neues Verfahren zur Herstellung von neuen Polyethersiloxanen mittels DMC-Katalyse zur Verfügung gestellt, bei dem ein oder mehrere epoxid-funktionelle Siloxanmonomere gemäß Formel (I) einzeln oder im Gemisch mit weiteren Epoxidverbindungen der Formeln (III) oder (IV) wahlweise blockartig oder statistisch an einen Kettenstarter der Formel (V) mit mindestens einem reaktivem Wasserstoff addiert werden. Das mindestens eine Epoxidgruppe tragende Organosiloxanmonomere ist dabei beliebig in die Polymerkette eingestreut oder auch kettenendständig im Polymergerüst angeordnet.

Weiteres Ziel des erfindungsgemäßen Verfahrens ist es, die von den Doppelmetallcyanid-Systemen bekannten Vorteile einer hohen Reaktionsgeschwindigkeit und des Verzichts auf die Katalysatordeaktivierung und abtrennung zu erhalten.

Darüber hinaus ist es das Ziel des erfindungsgemäßen Verfahrens, die Organosiloxanstruktur unter den Reaktionsbedingungen der selektiven DMC-katalysierten Alkoxylierung zu konservieren und somit einen Zugang zu einer neuen, ebenfalls erfindungsgemäßen Klasse von Siliconpolyethern zu schaffen, die im Gegensatz zu konventionell auf dem Wege der Hydrosilylierung hergestellten Polyethersiloxanen keine nicht umgesetzten Reste an Polyethern enthalten, sondern praktisch ausschließlich aus dem tensidisch aktiven und gewünschten Zielprodukt bestehen.

Die erfindungsgemäß als epoxidfunktionelle (Poly)-Organosiloxane verwendeten Siliciumverbindungen sind Verbindungen der allgemeinen Formel (I), 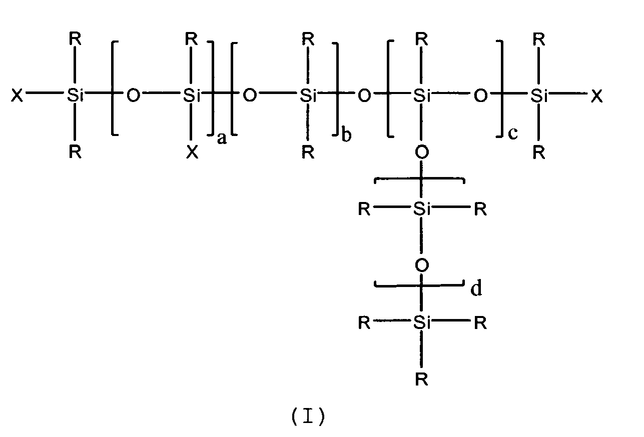 wobei
- R: einem oder mehreren gleichen oder verschiedenen Res- ten, ausgewählt aus linearen oder verzweigten, ge- sättigten, einfach oder mehrfach ungesättigten Alkyl-, Aryl-, Alkylaryl- oder Arylalkylresten mit 1 bis 40, insbesondere 1 bis 20 Kohlenstoffatomen, Halogenalkylgruppen mit 1 bis 20 Kohlenstoffatomen, und
- X: unabhängig voneinander entweder R oder einem Epoxidgruppen tragenden Fragment der Formel (II) 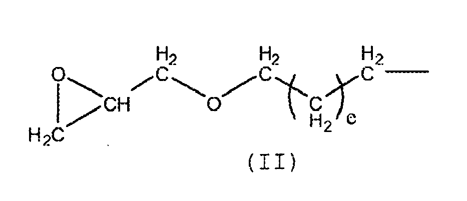 entspricht und unabhängig voneinander
a eine ganze Zahl von 0 bis 5,
b eine ganze Zahl von 0 bis 500,
c eine ganze Zahl von 0 bis 50,
d eine ganze Zahl von 0 bis 200,
e eine ganze Zahl von 0 bis 18 ist, und
die durch die Indices a, b und gekennzeichneten Strukturelemente in der Siloxanstruktur beliebig permutierbar sind und sowohl statistisch verteilt als auch blockartig vorliegen können,
mit der Maßgabe, dass epoxid-funktionelle (Poly)Organosiloxane Verbindungen der allgemeinen Formel (I) solche eingesetzt werden, bei denen der Rest X nur in einem Fall dem Fragment (II) entspricht und ansonsten äquivalent zum Rest R ist,
wobei ein oder mehrere epoxidfunktionelle Siloxanmonomere gemäß Formel (I) einzeln oder im Gemisch mit weiteren Epoxidverbindungen der Formeln (III) 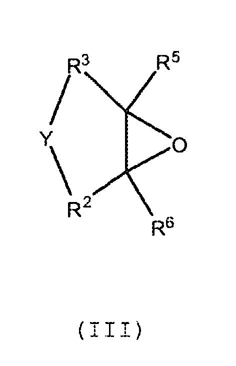 oder (IV) 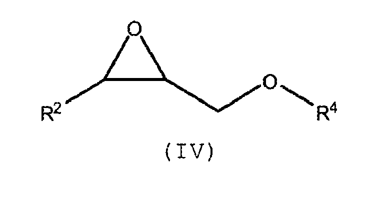 bei denen mindestens eine Glycidyloxypropyl-Gruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist,
wahlweise blockartig oder statistisch an einen Kettenstarter der Formel (V) mit mindestens einem reaktivem Wasserstoff addiert werden und die mindestens ein Epoxidgruppe tragenden Organosiloxanmonomer beliebig in die Polymerkette eingestreut aufweisen oder auch kettenendständig im Polymergerüst angeordnet tragen.

Eine nicht abschließende Sammlung solcher Epoxidgruppensubstituierter Siloxane gemäß der Formel (I), die allein oder in Mischungen miteinander oder in Kombination mit Epoxidverbindungen der Formeln (III) und (IV) verwendet werden können, umfasst zum Beispiel α,ω-Di-glycidyloxypropyl-poly (dimethylsiloxan), 3-Glycidyloxypropyl-1,1,1,3,5,5,5-heptamethyltrisiloxan, 5-Glycidyloxypropyl-1,1,1,3,3,5,5-heptamethyltrisiloxan, Hydrosilylierungsprodukte von Allylglycidylether mit Copolymeren aus der Äquilibrierung von Poly(methylhydrogen-siloxan) mit Siloxancyclen und Hexamethyldisiloxan sowie Hydrosilylierungsprodukte von Allylglycidylether mit Copolymeren aus der Äquilibrierung von Poly(methyl-hydrogensiloxan) mit Siloxancyclen und α, ω-Dihydrogenpolydimethylsiloxan.

Die epoxidfunktionellen Siloxane gemäß Formel (I) können bei der DMC-katalysierten Alkoxylierung zur Herstellung von Siliconpolyethern nach erfindungsgemäßem Verfahren bei Bedarf in beliebiger Dosierreihenfolge nacheinander oder im Gemisch mit Alkylenoxiden der allgemeinen Formel (III) eingesetzt werden, 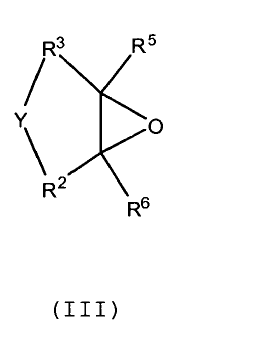 mit R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste in Formel (III) R² oder R³ Wasserstoff. Besonders bevorzugt werden als Alkylenoxide Ethylenoxid, Propylenoxid, 1,2- oder 2,3-Butylenoxid, Isobutylenoxid, 1,2-Dodecenoxid, Styroloxid, Cyclohexenoxid (hier ist R²-R³ eine -CH₂CH₂CH_{Z}CH₂-Gruppe, Y damit -CH₂CH₂-) oder Vinylcyclohexenoxid oder deren Mischungen eingesetzt. Die Kohlenwasserstoffreste R² und R³ gemäß Formel (III) können ihrerseits weiter substituiert sein und funktionelle Gruppen wie Halogene, Hydroxylgruppen oder Glycidyloxypropylgruppen tragen. Zu solchen Alkylenoxiden gehören Epichlorhydrin und 2,3-Epoxy-1-propanol.

Ebenfalls können Glycidylverbindungen wie Glycidylether und/oder Glycidylester der allgemeinen Formel (IV), 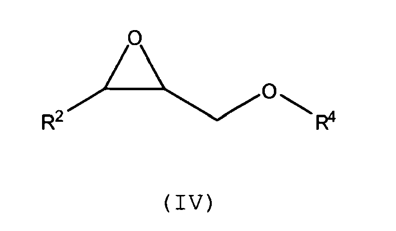 bei denen mindestens eine Glycidyloxypropyl-Gruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist, in Kombination mit den in Formel (I) dargestellten epoxidfunktionellen Siloxanen und gegebenenfalls zusätzlich zu den Alkylenoxiden der Formel (III) verwendet werden. Zu dieser Klasse von Verbindungen gehören zum Beispiel Allyl-, Butyl-, 2-Ethylhexyl-, Cyclohexyl-, Benzyl-, C₁₂/C₁₄-Fettalkohol-, Phenyl-, p-tert.-Butylphenyl- oder o-Kresylglycidylether. Bevorzugt eingesetzte Glycidylester sind zum Beispiel Glycidylmethacrylat, Glycidylacrylat oder Neodecansäureglycidylester. Ebenso einsetzbar sind polyfunktionelle Epoxidverbindungen wie zum Beispiel 1,2-Ethyl-, 1,4-Butyl- oder 1,6-Hexyldiglycidylether.

Als Starter oder Startverbindungen für die Alkoxylierungsreaktion können alle Verbindungen der Formel (V)

R¹-H (V)

(das H gehört zur OH-Gruppe eines Alkohols oder einer phenolischen Verbindung) allein oder in Mischungen miteinander eingesetzt werden, die gemäß Formel (V) mindestens eine reaktive Hydroxylgruppe aufweisen. R¹ entspricht einem gesättigten oder ungesättigten, gegebenenfalls verzweigten Rest, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine einfach oder mehrfach annelierte aromatische Gruppe, an die eine phenolische OH-Gruppe direkt gebunden ist. Die Kettenlänge der als Startverbindung einsetzbaren Alkoxy-, Arylalkoxy- oder Alkylarylalkoxygruppen aufweisenden Polyetherreste ist beliebig. Vorzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Unter Startverbindungen werden im Rahmen der vorliegenden Erfindung Substanzen verstanden, die den Anfang (Start) des herzustellenden Polyethermoleküls bilden, das durch die erfindungsgemäße Anlagerung von epoxidfunktionellen Monomeren der Formeln (I), (III) und (IV) erhalten wird. Die in dem erfindungsgemäßen Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols oder Phenols) eingesetzt. Die Startverbindungen können allein oder auch in Mischung miteinander eingesetzt werden.

Als OH-funktionelle Startverbindungen R¹-H (V) werden vorzugsweise Kohlenwasserstoffverbindungen, deren Kohlenstoffgerüst mit Sauerstoffatomen unterbrochen sein kann, mit Molmassen von 50 bis 10.000 g/mol, insbesondere 50 bis 2.000 g/mol und mit 1 bis 8, bevorzugt mit 1 bis 4 Hydroxylgruppen eingesetzt.

Beispielhaft für Verbindungen der Formel (V) seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt.

Vorteilhaft werden niedermolekulare Polyetherole mit 1-8 Hydroxylgruppen und Molmassen von 50 bis 2.000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit 1-20 phenolischen OH-Funktionen. Hierzu gehören beispielspweise Phenol, Alkyl- und Arylphenole, Bisphenol A und Novolake.

Zum Starten der Alkoxylierungsreaktion nach erfindungsgemäßem Verfahren wird das Startgemisch, bestehend aus einem Starter oder mehreren OH-funktionellen Startverbindungen der Formel (V) und dem Doppelmetallcyanid-Katalysator, der gegebenenfalls zuvor in einem Suspendiermittel aufgeschlämmt wurde, im Reaktor vorgelegt. Als Suspensionsmittel können entweder ein Polyether oder inerte Lösungsmittel benutzt werden oder vorteilhaft auch eine oder mehrere Startverbindungen gemäß Formel (V), oder alternativ ein Gemisch aus beiden Komponenten. Der vorgelegten Startmischung wird zumindest eine der Epoxidverbindungen gemäß Formel (I), (III) oder (IV) zudosiert. Zum Starten der Alkoxylierungsreaktion und zur Aktivierung des Doppelmetallcyanid-Katalysators wird zunächst meist nur ein Teil der insgesamt zu dosierenden Menge an Epoxid zugefügt. Bevorzugt wird hierfür ein Alkylenoxid gemäß Formel (III), ganz besonders bevorzugt Propylenoxid oder 1,2-Butylenoxid eingesetzt. Das molare Verhältnis von Epoxid zu den reaktiven Gruppen des Starters, insbesondere den OH-Gruppen im Startgemisch, liegt in der Startphase dabei vorzugsweise bei 0,1 bis 10 zu 1, bevorzugt bei 0,2 bis 5 zu 1, insbesondere bei 0,4 bis 3 zu 1. Es kann vorteilhaft sein, wenn vor der Zugabe des Epoxids gegebenenfalls vorhandene, die Reaktion inhibierende Stoffe aus dem Reaktionsgemisch z.B. durch Destillation entfernt werden.

Das Starten der exothermen Reaktion kann z.B. durch eine Druck- und/oder Temperaturüberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist.

Nach der Startphase, also nach Initialisierung der Reaktion, werden je nach angestrebter Molmasse entweder gleichzeitig weitere Startverbindung der Formel (V) und weiteres Epoxid oder nur weiteres Epoxid zudosiert. Die unterschiedlichen Epoxide der Formeln (I), (III) und (IV) können sowohl einzeln als auch im beliebigen Gemisch addiert werden. Bevorzugt werden die erfindungsgemäß verwendeten epoxid-funktionellen Siloxanmonomere in Kombination mit Alkylenoxiden copolymerisiert. Die Umsetzung kann z.B. zwecks Viskositätserniedrigung des Reaktionsgemisches in einem inerten Lösemittel durchgeführt werden. Als inerte Lösungsmittel eignen sich Kohlenwasserstoffe, insbesondere Toluol, Xylol oder Cyclohexan.

In den erfindungsgemäßen Produkten beträgt das molare Verhältnis der Summe der dosierten Epoxide, inklusive der bereits in der Startphase zugefügten Epoxide, bezogen auf die eingesetzte Startverbindung, insbesondere bezogen auf die Anzahl der OH-Gruppen der eingesetzten Startverbindung, dabei vorzugsweise 1 bis 10⁵ zu 1, insbesondere 1 bis 10⁴ zu 1.

Die Anlagerung der Epoxidverbindungen geschieht vorzugsweise bei einer Temperatur von 60 bis 250 °C, besonders bevorzugt bei einer Temperatur von 90 bis 160 °C. Der Druck, bei dem die Alkoxylierung stattfindet, beträgt vorzugsweise 0,02 bar bis 100 bar, besonders bevorzugt 0,05 bis 20 bar und insbesondere von 0,2 bis 5 bar absolut. Durch die Durchführung der Alkoxylierung bei Unterdruck kann die Reaktion sehr sicher durchgeführt werden. Gegebenenfalls kann die Alkoxylierung in Gegenwart eines Inertgases (z.B. Stickstoff) durchgeführt werden.

Nach der Monomer-Addition und eventueller Nachreaktion zur Vervollständigung des Monomerumsatzes werden evtl. vorhandene Reste von nicht abreagiertem Monomer und eventuell weiteren leicht flüchtigen Bestandteilen, üblicherweise durch Vakuumdestillation, Gasstrippen oder andere Methoden der Desodorierung entfernt. Die Entfernung leichtflüchtiger Nebenkomponenten kann sowohl batchweise als auch kontinuierlich erfolgen. Beim erfindungsgemäßen Verfahren auf Basis der DMC-Katalyse kann im Normalfall auf eine Filtration verzichtet werden.

Die Verfahrensschritte können bei identischen oder verschiedenen Temperaturen ausgeführt werden. Die im Reaktor zum Reaktionsstart vorgelegte Mischung aus Startsubstanz, DMC-Katalysator und gegebenenfalls Suspensionsmittel kann vor Beginn der Monomerdosierung gemäß der Lehre von WO-98/52689 durch Strippen vorbehandelt werden. Dabei wird über die Reaktorzuführung ein Inertgas dem Reaktionsgemisch zugemischt und mit Hilfe einer an das Reaktorsystem angeschlossenen Vakuumanlage werden leichter flüchtige Komponenten durch Anlegen eines Unterdrucks aus dem Reaktionsgemisch entfernt. Auf diese einfache Weise können aus dem Reaktionsgemisch Stoffe, die den Katalysator inhibieren können, wie z. B. niedere Alkohole oder Wasser, entfernt werden. Die Zugabe von Inertgas und das gleichzeitige Entfernen der leichter flüchtigen Komponenten kann insbesondere beim Anfahren/Starten der Reaktion von Vorteil sein, da durch die Zugabe der Reaklanden oder durch Nebenreaktionen auch inhibierende Verbindungen in das Reaktionsgemisch gelangen können.

Als DMC-Katalysator können alle bekannten DMC-Katalysatoren, vorzugsweise solche, die Zink und Kobalt aufweisen, bevorzugt solche, die Zinkhexacyanocobaltat(III) aufweisen, eingesetzt werden. Vorzugsweise werden die in US 5,158,922, US 20030119663, WO 01/80994 oder in den oben genannten Schriften beschriebenen DMC-Katalysatoren eingesetzt. Die Katalysatoren können amorph oder kristallein sein.

Im Reaktionsgemisch liegt die Katalysatorkonzentration vorzugsweise bei > (größer) 0 bis 2.000 wppm (Massenppm), bevorzugt bei > 0 bis 1.000 wppm, besonders bevorzugt bei 0,1 bis 500 wppm und ganz besonders bevorzugt bei 1 bis 200 wppm. Diese Konzentration ist dabei bezogen auf die Gesamtmasse der entstehenden Alkoxylierungsprodukte.

Vorzugsweise wird der Katalysator nur einmal in den Reaktor dosiert. Die Katalysatormenge ist so einzustellen, dass eine ausreichende katalytische Aktivität für das Verfahren gegeben ist. Der Katalysator kann als Feststoff oder in Form einer Katalysatorsuspension dosiert werden. Wird eine Suspension verwendet, so eignet sich insbesondere der Starter der Formel (V) als Suspensionsmittel. Bevorzugt wird aber auf eine Suspendierung verzichtet.

Durch das erfindungsgemäße Verfahren werden erfindungsgemäße Polyethersiloxane der Formel (VI) bereitgestellt, die sich dadurch auszeichnen, dass sie hinsichtlich Strukturaufbau und Molmasse gezielt und reproduzierbar hergestellt werden können.

Insbesondere ermöglicht das erfindungsgemäße Verfahren damit den Zugang zu funktionalisierten Poly-(Organo)Siloxanen, oder Polyethersiloxan-Copolymeren, die frei von Überschusspolyethern sind.

Das Reaktionsprodukt des erfindungsgemäßen Verfahrens ist somit frei von den bislang unweigerlich vorhandenen Resten an Edukten, den Polyethern (Überschusspolyether). Die Sequenz der Monomereinheiten kann in weiten Grenzen variabel gestaltet werden. Epoxidmonomere des Typs (I), (III) und (IV) können beliebig blockartig aneinander gereiht oder statistisch in die Polymerkette eingebaut sein. Die durch die Reaktion unter Ringöffnung der Reaktionskomponenten der Formeln (I), (III) und (IV) in die entstehende Polymerkette eingefügten Fragmente sind in ihrer Sequenz untereinander frei permutierbar.

Entspricht X in Formel (I) in mehr als einem Fall dem Epoxidfragment (II), werden durch das erfindungsgemäße Verfahren Polyethersiloxane in Form hochfunktionalisierter Netzwerke gebildet, bei denen Polymerketten, die jeweils von der Startverbindung R¹-H (V) gestartet sind und die in ihrer Abfolge die frei permutierbaren Fragmente enthalten, die durch die Reaktion unter Ringöffnung der Reaktionskomponenten der Formeln (I), (III) und (IV) in die entstehende Polymerkette eingefügt wurden, über die durch das Siloxangerüst der Formel (I) definierten Struktureinheiten miteinander verknüpft sind.

Es entstehen somit hochkomplexe, hochfunktionalisierte, hochmolekulare Strukturen. Die Funktionalitäten lassen sich gezielt auf ein gewünschtes Anwendungsgebiet einstellen. Durch die Alkoxylierung von Gemischen aus mono-, di- oder poly-epoxidfunktionellen Organosiloxanen gemäß Formel (I) kann die Epoxidfunktionalität eingestellt werden. Der Vernetzungsgrad und die Komplexität der erhaltenen Polymerstrukturen steigen mit zunehmender mittlerer Anzahl von Epoxidgruppen im Monomer bzw. Monomerengemisch. Bevorzugt ist eine Epoxidfunktionalität zwischen 1 und 2, ganz besonders bevorzugt eine Epoxidfunktionalität von 1 bis 1,5.
Dabei können die Fragmente, die durch die Reaktion unter Ringöffnung der Reaktionskomponenten der Formeln (I), (III) und (IV) in die entstehende Polymerkette eingefügt wurden, im Rahmen der vorhergehenden Definitionen blockartig oder statistisch verteilt, nicht nur in der Kette einer Polyether-Struktureinheit vorkommen, sondern auch statistisch verteilt über die Vielzahl der gebildeten und über die durch Formel (I) vorgegebenen Siloxanstruktureinheiten miteinander verbundenen Polyetherstruktureinheiten, vorkommen.

Die Mannigfaltigkeit der Strukturvariationen der Verfahrensprodukte gestattet damit keine eindeutige formelmäßige Beschreibung. Bevorzugt werden die erfindungsgemäßen Polyetherstrukturen der Formel (VI), die durch die erfindungsgemäße Alkoxylierung von monoepoxidfunktionellen Organosiloxanen de r Formel (I) entstehen, bei denen der Rest X nur in einem Fall dem Fragment (II) entspricht und ansonsten äquivalent zum Rest R ist, 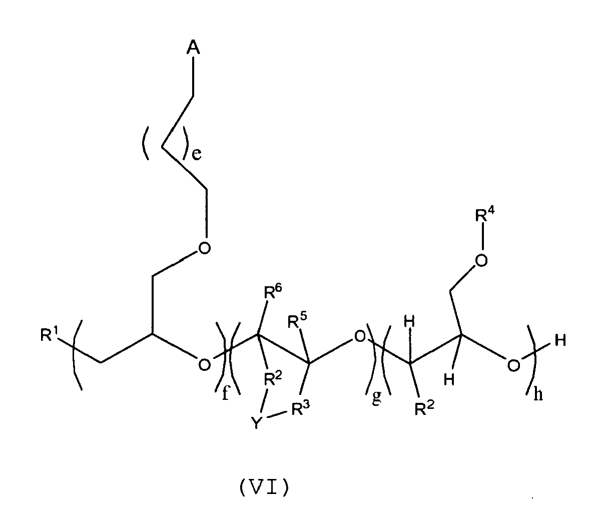 wobei das Fragment A dem Strukturelement der Formel (VIa) 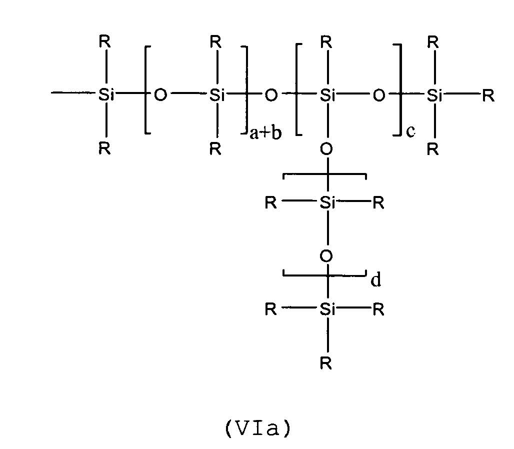 oder dem Strukturelement gemäß Formel (VIb) 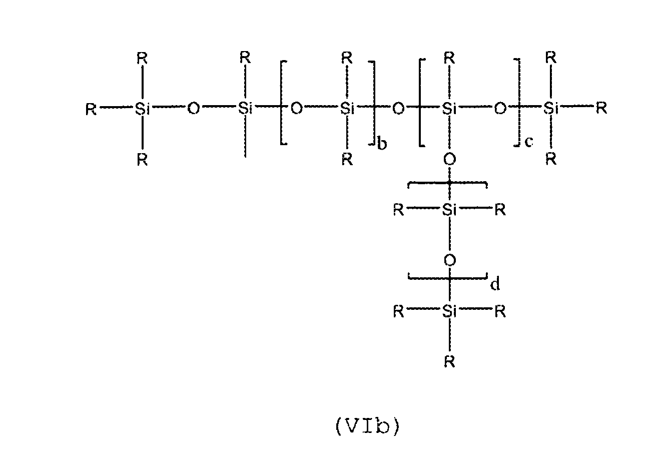 entspricht und gleichzeitig a in Formel (I) den Wert 1 annimmt.

Die Substituenten R, R¹-R⁶, die Reste A, X und Y sowie die Indizes a, b, c, d und e entsprechen den zuvor für die Verbindungen der Formeln (I) bis (V) genannten Definitionen, mit der Maßgabe dass, die durch die Indices a, b und c gekennzeichneten Strukturelemente in der Siloxanstruktur beliebig permutierbar sind und sowohl statistisch verteilt als auch blockartig vorliegen können, wobei
- f: eine ganze Zahl von 1 bis 200, bevorzugt 1 bis 100, besonders bevorzugt 1 bis 20 und insbesondere 1 bis 10 ist,
- g: eine ganze Zahl bis 10.000, berorzugt bis 1.000, besonders bevorzugt bis 300 und insbesondere bis 100 ist,
- h: eine ganze Zahl von 0 bis 1.000, bevorzugt 0 bis 100, besonders bevorzugt 0 bis 50 und insbesondere 0 bis 30 ist,
mit der Maßgabe, dass die Fragmente mit den Indices f, g und h untereinander frei permutierbar, d.h. in der Sequenz innerhalb der Polyetherkette gegeneinander austauschbar sind.

Die verschiedenen Monomereinheiten mit den Indexzahlen f, g und h sind untereinander blockweise aufgebaut oder können auch einer statistischen Verteilung unterliegen mit der Maßgabe, dass das Fragment mit dem Index g in einem molaren Überschuss gegenüber dem Fragment mit dem Index f vorhanden ist.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (VI).

Bevorzugt sind Verbindungen, hergestellt nach dem erfindungsgemäßen Verfahren, die die Fragmente, die durch die Reaktion unter Ringöffnung der Reaktionskomponenten der Formeln (I) und (III) entstehen, enthalten, und bei denen das Fragment mit dem Index g in einem molaren Überschuss gegenüber dem Fragment mit dem Index f vorhanden ist. Bevorzugt beträgt das Verhältnis von g zu f 2 bis 500 zu 1, besonders bevorzugt 5 bis 300 zu 1, ganz besonders bevorzugt 5 bis 100 zu 1. Der Index h kann dabei beliebige Werte von 0 bis 1.000 annehmen.

Diese erfindungsgemäßen Siliconpolyether/Polyethersiloxane oder auch Polyethersiloxan-Copolymere stellen auf Grund ihres verglichen mit klassisch über die Hydrosilylierungsroute synthetisierten Verbindungen andersartigen chemischen Strukturaufbaus eine neue Produktklasse dar. Das erfindungsgemäße Verfahren gestattet es, den Polymeraufbau der erfindungsgemäßen Siloxan-Polyether-Copolymere je nach Art des Starters sowie Art, Menge und Abfolge der einsetzbaren Epoxidmonomere auf mannigfaltige Weise zu variieren und so anwendungstechnisch wichtige Produkteigenschaften abhängig vom Ver-wendungszweck maßzuschneidern. Die grenzflächenaktiven Eigenschaften der Produkte, allgemein ihre Hydrophilie oder Hydrophobie, lassen sich durch Strukturvariationen in weiten Grenzen beeinflussen. Ihre Anwendungseigenschaften werden im Gegensatz zu heute verfügbaren Polyethersiloxanen nicht durch Anteile an freien Polyethern beeinträchtigt. Die neuen Siliconpolyether stellen vielmehr Konzentrate tensidisch wirksamer Verbindungen dar. Die nach erfindungsgemäßem Verfahren gewonnenen Polymere eignen sich daher beispielsweise als Polyurethanschaumstabilisatoren, Netzmittel, Dispergieradditive, Entlüfter oder Entschäumer.

Im Falle von f gleich Null, entspricht die Formel (VI) einem nicht durch die Siloxanfunktionalisierung substituierten Polyether. Ein solcher Polyether entspricht gleichzeitig der Nebenkomponente bei bislang bekannten Verfahren in Form des nicht vollständig reagierenden Edukts und damit dem im Produkt verbleibenden Überschusspolyether.

Als Reaktoren für die erfindungsgemäß beanspruchte Umsetzung können prinzipiell alle geeigneten Reaktortypen zum Einsatz kommen, die die Reaktion und ihre eventuell vorhandene Wärmetönung beherrschen lassen.

Die Reaktionsführung kann in verfahrenstechnisch bekannter Art und Weise kontinuierlich, semi-kontinuierlich oder auch batchweise erfolgen und lässt sich flexibel auf die vorhandenen produktionstechnischen Einrichtungen abstimmen.

Neben herkömmlichen Rührkesselreaktoren können auch Strahlschlaufenreaktoren mit Gasphase und internen Wärmetauscherrohren, wie in WO-01/062826 beschrieben, verwendet werden. Darüber hinaus können gasphasenfreie Loop-Reaktoren eingesetzt werden.

Bei der Dosierung der Edukte ist eine gute Verteilung der an der chemischen Umsetzung beteiligten Stoffe, d.h. der Epoxidmonomere, Starter, DMC-Katalysator und gegebenenfalls Suspensionsmittel zu sichern.

Weitere Gegenstände der Erfindung werden durch die Ansprüche beschrieben.

Die erfindungsgemäßen Polyether und die entsprechenden Verfahren zu deren Herstellung werden nachfolgend beispielhaft beschrieben, ohne dass die Erfindung als auf diese beispielhaften Ausführungsformen beschränkt angesehen werden kann.

Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Ausführungsbeispiele:

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

Herstellung von Siloxangruppen tragenden Polyetheralkoholen nach erfindungsgemäßem Verfahren mit Hilfe von DMC-Katalysatoren. Die mittleren Molmassen wurden per GPC-Analyse gegen Polypropylenglykol als Standard ermittelt. Das in den nachfolgend beschriebenen Experimenten als Monomer eingesetzte epoxyfunktionelle Siloxan wurde nach bekanntem Stand der Technik durch Pt-katalysierte Hydrosilylierung von Heptamethyltrisiloxan mit Allylglycidylether hergestellt.

### Beispiel 1:

In einem 3 Liter Autoklaven werden 200,0 g Polypropylenglykolmonobutylether (mittlere Molmasse 750 g/mol) und 0,017 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 50,0 g Propylenoxid zugeführt. Nach 20 min und Anspringen der Reaktion (erfolgter Reaktorinnendruckabfall) werden gleichzeitig 100,0 g Epoxysiloxan auf Basis von Heptamethyltrisiloxan und Allylglycidylether sowie 368,0 g Propylenoxid kontinuierlich und unter Kühlen innerhalb von 30 min bei 130 °C und max. 1,2 bar Reaktorinnendruck absolut zudosiert. An die 180 minütige Nachreaktion bei 130-150 °C schließt sich die Entgasungsstufe an. Dabei werden flüchtige Anteile wie restliches Propylenoxid im Vakuum abdestilliert. Der fertige farblose, niedrig viskose und klare Polyethersiloxan wird auf unter 80 °C abgekühlt und aus dem Reaktor abgelassen.
Das Produkt hat eine mittlere Molmasse M_{w} von 4.300 g/mol bzw. Mₙ von 2.500 g/mol.

### Beispiel 2:

In einem 3 Liter Autoklaven werden 200,0 g Polypropylenglykolmonobutylether (mittlere Molmasse 750 g/mol) und 0,015 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 50,0 g Propylenoxid zugeführt. Nach 20 min und Anspringen der Reaktion (erfolgter Reaktorinnendruckabfall) wird eine homogene Mischung aus 100,0 g Epoxysiloxan auf Basis von Heptamethyltrisiloxan und Allylglycidylether und 463,0 g 1,2-Butylenoxid kontinuierlich und unter Kühlen innerhalb von 35 min bei 135 °C und max. 0,8 bar Reaktorinnendruck absolut zudosiert. An die 180 minütige Nachreaktion bei 135-150 °C schließt sich die Entgasungsstufe an. Dabei werden flüchtige Anteile wie restliches 1,2-Butylenoxid im Vakuum abdestilliert. Das fertige farblose, niedrig viskose Polyethersiloxan wird auf unter 80 °C abgekühlt und aus dem Reaktor abgelassen.
Das Produkt hat eine mittlere Molmasse M_{w} von 3.000 g/mol bzw. Mₙ von 2.000 g/mol.

### Beispiel 3:

In einem 3 Liter Autoklaven werden 200,0 g Polypropylenglykolmonobutylether (mittlere Molmasse 2.200 g/mol) und 0,015 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 58,0 g Propylenoxid zugeführt. Nach 15 min und Anspringen der Reaktion (erfolgter Reaktorinnendruckabfall) werden abwechselnd jeweils 6 Portionen von 16,0 g Epoxysiloxan auf Basis von Heptamethyltrisiloxan und Allylglycidylether und 26,0 g Propylenoxid unter Kühlen innerhalb von 5 Stunden bei 125 °C und max. 1,0 bar Reaktorinnendruck absolut zudosiert. An die 150 minütige Nachreaktion bei 125-150 °C schließt sich die Entgasungsstufe an, um flüchtige Anteile wie restliches Propylenoxid im Vakuum abzudestillieren. Das fertige Polyethersiloxan wird auf unter 90 °C abgekühlt und aus dem Reaktor abgelassen.
Das blockartig aufgebaute farblose, mittelviskose Produkt ist trübe und hat eine mittlere Molmasse M_{w} von 11.200 g/mol bzw. Mₙ von 3.600 g/mol.

### Beispiel 4:

In einem 3 Liter Autoklaven werden 200,0 g Polypropylenglykolmonobutylether (mittlere Molmasse 2.200 g/mol) und 0,017 g Zinkhexacyanocobaltat-DMC-Katalysator unter Stickstoff vorgelegt und unter Rühren auf 130 °C aufgeheizt. Der Reaktor wird bis auf einen Innendruck von 30 mbar evakuiert, um evtl. vorhandene flüchtige Inhaltsstoffe destillativ zu entfernen. Zur Aktivierung des DMC-Katalysators wird eine Portion von 50,0 g Propylenoxid zugeführt. Nach 10 min und Anspringen der Reaktion (erfolgter Reaktorinnendruckabfall) wird ein homogenes Gemisch aus 200,0 g Epoxysiloxan auf Basis von Heptamethyltrisiloxan und Allylglycidylether und 463,0 g 1,2-Butylenoxid unter Kühlen innerhalb von 70 min bei 125 °C und max. 0,8 bar Reaktorinnendruck absolut zudosiert. Nach 150 min Nachreaktion bei 125-150 °C werden 78,0 g Propylenoxid in 5 min bei 130 °C und max. 1,5 bar Reaktorinnendruck addiert. Es schließt sich eine erneute Nachreaktion von 150 min bei 130-150 °C sowie die Entgasungsstufe an, um flüchtige Anteile wie restliches Epoxid im Vakuum abzudestillieren. Das fertige Polyethersiloxan wird auf unter 90 °C abgekühlt und aus dem Reaktor abgelassen.
Das gemischt aufgebaute farblose und niedrig viskose Produkt hat eine mittlere Molmasse M_{w} von 4.000 g/mol bzw. Mₙ von 2.900 g/mol.

## Patentansprüche

1. Polyethersiloxane der Formel (VI), 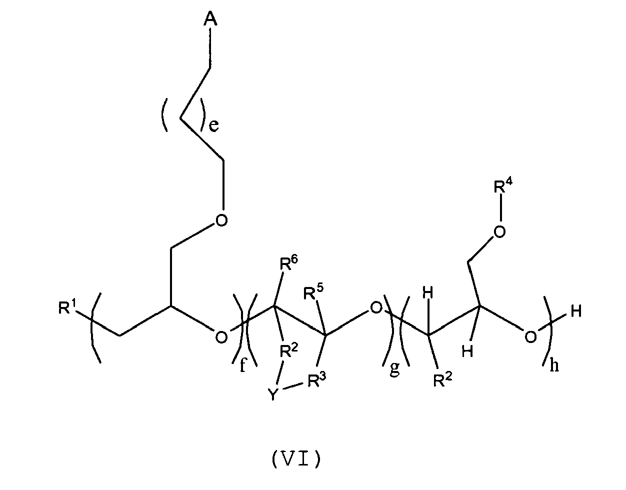 wobei das Fragment A dem Strukturelement der Formel (VIa) 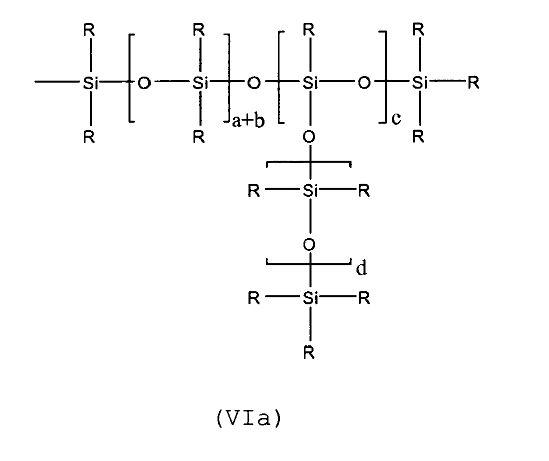 oder dem Strukturelement gemäß Formel (VIb) 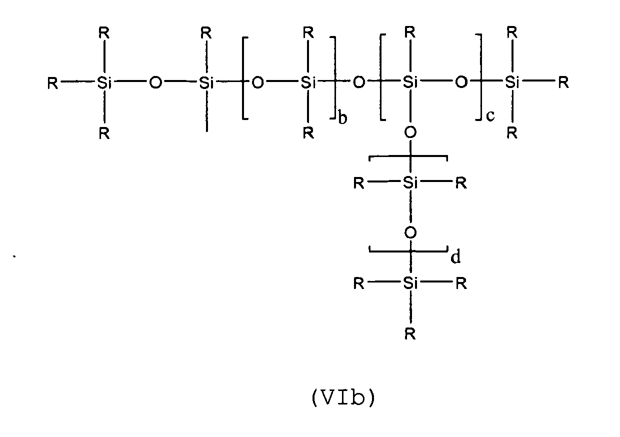 entspricht und
R einem oder mehreren gleichen oder verschiedenen Resten, ausgewählt aus linearen oder verzweigten, gesättigten, einfach oder mehrfach ungesättigten Alkyl-, Aryl-, Alkylaryl- oder Arylalkylresten mit 1 bis 40 Kohlenstoffatomen, Halogenalkylgruppen mit 1 bis 20 Kohlenstoffatomen,
R¹ einem gesättigten oder ungesättigten, gegebenenfalls verzweigten Rest, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine einfach oder mehrfach annelierte aromatische Gruppe, an die eine phenolische OH-Gruppe direkt gebunden ist, entspricht,
R² oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind, wobei der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein, ist Y gleich 0, so sind R² oder R³ unabhängig voneinander gleich ein linearer oder verzweigter Rest mit 1 bis 20 Kohlenstoffatomen, die Kohlenwasserstoffreste R² und R³ können ihrerseits weiter substituiert sein und funktionelle Gruppen wie Halogene, Hydroxylgruppen oder Glycidyloxypropylgruppen tragen,
R⁴ eine Ether- oder Esterfunktion, die an einen linearen oder verzweigten Alkylrest von 1 bis 24 Kohlenstoffatomen, einen aromatischen oder cycloaliphatischen Rest gebunden ist,
und unabhängig voneinander
a eine ganze Zahl von 0 bis 5,
b eine ganze Zahl von 0 bis 500,
c eine ganze Zahl von 0 bis 50,
d eine ganze Zahl von 0 bis 200,
e eine ganze Zahl von 0 bis 18 ist, und
die durch die Indices a, b und c **gekennzeichnet**en Strukturelemente in der Siloxanstruktur beliebig permutierbar sind und sowohl statistisch verteilt als auch blockartig vorliegen können,
f eine ganze Zahl von 1 bis 200 ist,
g eine ganze Zahl bis 10.000 ist,
h eine ganze Zahl von 0 bis 1.000 ist,
mit der Maßgabe, dass die Fragmente mit den Indices f, g und h untereinander frei permutierbar und damit in der Sequenz innerhalb der Polyetherkette gegeneinander austauschbar sind und die verschiedenen Monomereinheiten mit den Indexzahlen f, g und h untereinander blockweise aufgebaut sind oder aber auch einer statistischen Verteilung unterliegen können,
mit der Maßgabe, dass das Fragment mit dem Index g in einem molaren Überschuss gegenüber dem Fragment mit dem Index f vorhanden ist.

2. Polyethersiloxane gemäß Anspruch 1, die frei von Überschusspolyethern sind.

3. Polyethersiloxane gemäß Anspruch 1 oder 2, die frei von Verbindungen der Formel (VI) mit f gleich Null sind.

4. Polyethersiloxane gemäß einem der vorstehenden Ansprüche hergestellt nach einem der Verfahren gemäß den Ansprüchen 5 bis 13.

5. Verfahren zur Herstellung von Polyethersiloxanen gemäß Anspruch 1 bis 3 durch alkoxylierende Polymerisation von Epoxidgruppen tragenden (Poly)Organosiloxanen ausgehend von einem Starter R¹-H (V) mit reaktivem Wasserstoff mittels DMC-Katalyse
**dadurch gekennzeichnet, dass**
als epoxid-funktionelle (Poly)Organosiloxane Verbindungen der allgemeinen Formel (I) eingesetzt werden, 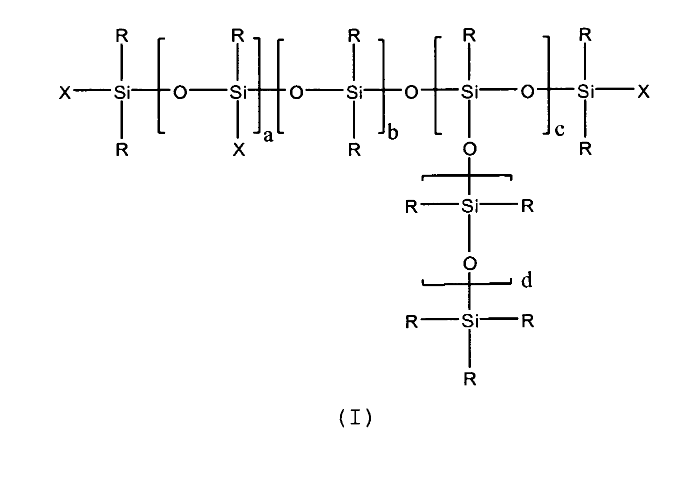 wobei,
X unabhängig voneinander entweder R oder einem Epoxidgruppen tragenden Fragment der Formel (II) 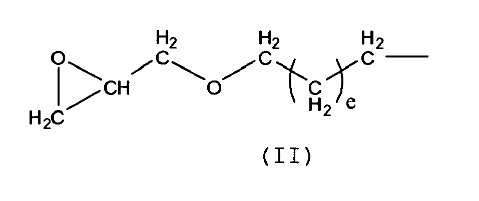 entspricht und unabhängig voneinander
a eine ganze Zahl von 0 bis 5,
b eine ganze Zahl von 0 bis 500,
c eine ganze Zahl von 0 bis 50,
d eine ganze Zahl von 0 bis 200,
e eine ganze Zahl von 0 bis 18 ist, und
die durch die Indices a, b und c **gekennzeichneten** Strukturelemente in der Siloxanstruktur beliebig permutierbar sind und sowohl statistisch verteilt als auch blockartig vorliegen können,
mit der Maßgabe, dass als epoxid-funktionelle (Poly)Organosiloxane Verbindungen der allgemeinen Formel (I) solche eingesetzt werden, bei denen der Rest X nur in einem Fall dem Fragment (II) entspricht und ansonsten äquivalent zum Rest R ist,
wobei ein oder mehrere epoxidfunktionelle Siloxanmonomere gemäß Formel (I) einzeln oder im Gemisch mit weiteren Epoxidverbindungen der Formeln (III) 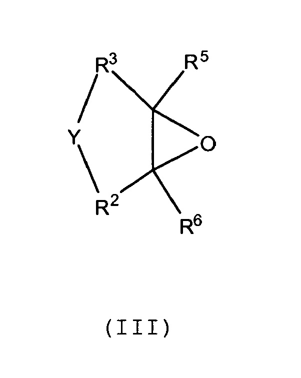 oder (IV) 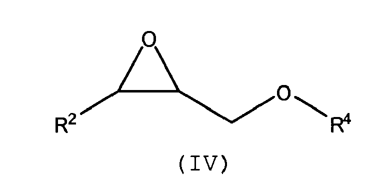 bei denen mindestens eine Glycidyloxypropyl-Gruppe über eine Ether- oder Esterfunktion R⁴ an einen linearen oder verzweigten Alkylrest von 1 bis 24 Kohlenstoffatomen, einen aromatischen oder cycloaliphatischen Rest gebunden ist,
wahlweise blockartig oder statistisch an einen Kettenstarter der Formel (V) mit mindestens einem reaktivem Wasserstoff addiert werden und die mindestens ein Epoxidgruppe tragenden Organosiloxanmonomer beliebig in die Polymerkette eingestreut aufweisen oder auch kettenendständig im Polymergerüst angeordnet tragen.

6. Verfahren nach Anspruch 5, **dadurch gekennzeichnet, dass** als Starter R¹-H (V) Kohlenwasserstoffverbindungen, deren Kohlenstoffgerüst durch Sauerstoffatome unterbrochen sein kann, mit Molmassen von 50 bis 10.000 g/mol und mit 1 bis 8 aliphatischen, cycloaliphatischen oder phenolischen Hydroxylgruppen eingesetzt werden.

7. Verfahren nach Anspruch 6, **dadurch gekennzeichnet, dass** Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, niedermolekulare Polyetherole mit 1-8 Hydroxylgruppen und Molmassen von 50 bis 2.000 g/mol, 1,4-Butandiol, 1,6-Hexandiol, Trimethylolpropan, Glycerin, Pentaerythrit, Sorbit, Cellulosezucker, Lignin, Phenol, Alkyl- und Arylphenole, Bisphenol A und Novolake oder auch weitere auf Naturstoffen basierende, Hydroxylgruppen tragende Verbindungen, allein oder in Mischung miteinander als Starter R¹-H (V) verwendet werden.

8. Verfahren nach zumindest einem der Ansprüche 5 bis 7, **dadurch gekennzeichnet, dass** die Reaktion in einem oder in Mischungen mehrerer inerten Lösungsmittel durchgeführt wird.

9. Verfahren nach zumindest einem der Ansprüche 5 bis 7, **dadurch gekennzeichnet, dass** als Lösungsmittel oder Suspensionsmittel für den DMC-Katalysator der Starter R¹-H (V) verwendet wird.

10. Verfahren nach zumindest einem der Ansprüche 5 bis 9, **dadurch gekennzeichnet, dass** das molare Verhältnis der Summe der dosierten Epoxide, inklusive der bereits in der Startphase zugefügten Epoxide, bezogen auf die eingesetzte Startverbindung, insbesondere bezogen auf die Anzahl der OH-Gruppen der eingesetzten Startverbindung 1 bis 10⁵ zu 1 beträgt.

11. Verfahren nach zumindest einem der Ansprüche 5 bis 10, **dadurch gekennzeichnet, dass** die Reaktion batchweise oder kontinuierlich erfolgt.

12. Verfahren nach zumindest einem der Ansprüche 5 bis 11, **dadurch gekennzeichnet, dass** die DMC-Katalysatorkonzentration bei größer 0 bis 2.000 wppm bezogen auf die Gesamtmasse der entstehenden Alkoxylierungsprodukte liegt.

13. Verfahren nach Anspruch 12, **dadurch gekennzeichnet, dass** der Katalysator als Feststoff oder in Form einer Katalysatorsuspension dosiert wird.

14. Verwendung von Polyethersiloxanen gemäß Anspruch 1 bis 4 als Polyurethanschaumstabilisatoren, Netzmittel, Dispergieradditive, Entlüfter oder Entschäumer.

## Claims

1. Polyethersiloxanes of the formula (VI) 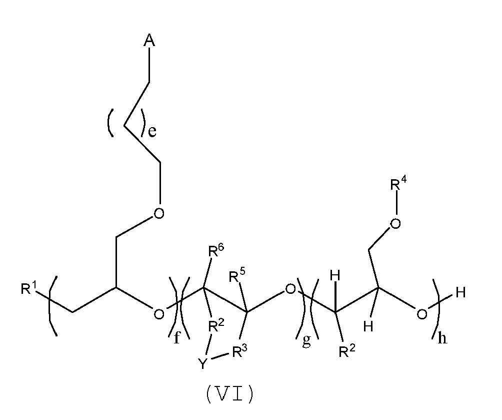 where the fragment A corresponds to the structural element of the formula (VIa) 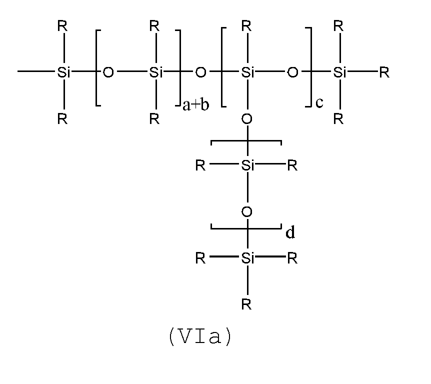 or to the structural element of the formula (VIb) 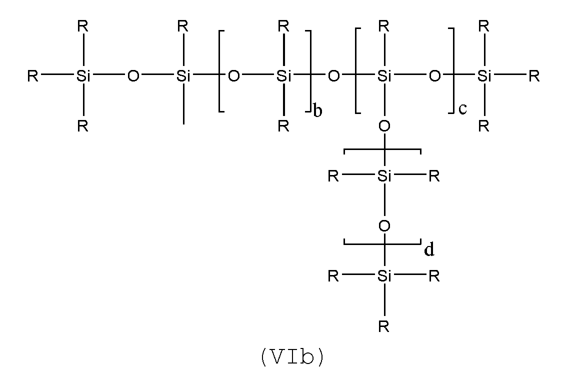 and
R is one or more identical or different radicals selected from linear and branched, saturated, mono- and polyunsaturated alkyl, aryl, alkylaryl or arylalkyl radicals having 1 to 40 carbon atoms and haloalkyl groups having 1 to 20 carbon atoms, R¹ corresponds to a saturated or unsaturated, optionally branched radical, or is a polyether radical of the alkoxy, arylalkoxy or alkylarylalkoxy group type, in which the carbon chain may be interrupted by oxygen atoms, or R¹ is a singly or multiply fused aromatic group to which a phenolic OH group is bonded directly,
R² or R³, and R⁵ or R⁶, are identically or else independently H or a saturated or optionally mono-or polyunsaturated, optionally mono- or polyvalent hydrocarbon radical which may also have further substitution, where the R⁵ or R⁶ radicals are each a monovalent hydrocarbon radical, where the hydrocarbon radical may be bridged cycloaliphatically via the Y fragment; Y may be absent, or else may be a methylene bridge with 1 or 2 methylene units; when Y is 0, R² and R³ are each independently a linear or branched radical having 1 to 20 carbon atoms, and the hydrocarbon radicals R² and R³ may in turn have further substitution and bear functional groups such as halogens, hydroxyl groups or glycidyloxypropyl groups,
R⁴ is an ether or ester function which is bonded to a linear or branched alkyl radical of 1 to 24 carbon aroms, an aromatic or cycloaliphatic radical,
and, independently of one another,
a is an integer of 0 to 5,
b is an integer of 0 to 500,
c is an integer of 0 to 50,
d is an integer of 0 to 200,
e is an integer of 0 to 18, and
the structural elements indicated by the indices a, b and c in the siloxane structure are freely permutable and may be present either in random distribution or in blocks,
f is an integer of 1 to 200,
g is an integer up to 10 000,
h is an integer of 0 to 1000,
with the proviso that the fragments with the indices f, g and h are freely permutable with one another and hence are exchangeable for one another in the sequence within the polyether chain and the different monomer units with the indices f, g and h are in an alternating blockwise structure or else may be subject to a random distribution,
with the proviso that the fragment with the index g is present in a molar excess with respect to the fragment with the index f.

2. Polyethersiloxanes according to Claim 1 which are free of excess polyethers.

3. Polyethersiloxanes according to Claim 1 or 2 which are free of compounds of the formula (VI) where f is zero.

4. Polyethersiloxanes according to any one of the preceding claims prepared by one of the processes according to Claims 5 to 13.

5. Process for preparing polyethersiloxanes according to Claims 1 to 3 by alkoxylating polymerization of (poly)organosiloxanes bearing epoxy groups proceeding from a starter R¹-H (V) with reactive hydrogen by means of DMC catalysis,
**characterized in that**
the epoxy-functional (poly)organosiloxanes used are compounds of the general formula (I) 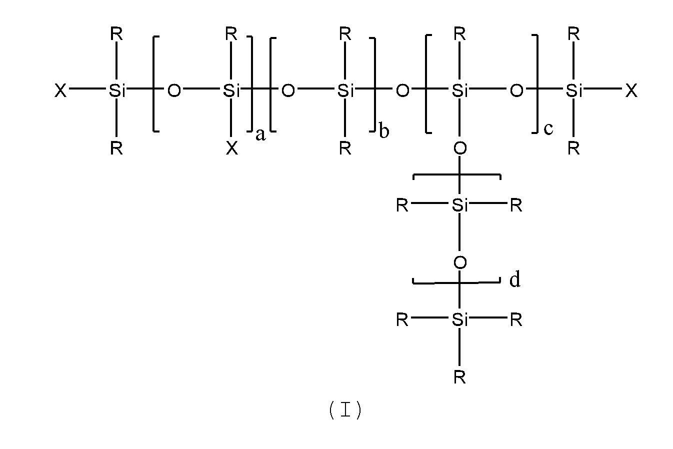 where
X is independently either R or a fragment which bears epoxy groups and is of the formula (II) 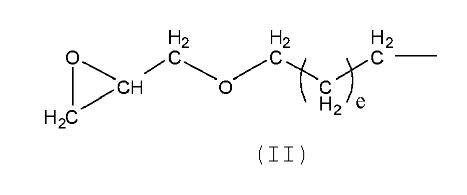 and, independently of one another,
a is an integer of 0 to 5,
b is an integer of 0 to 500,
c is an integer of 0 to 50,
d is an integer of 0 to 200,
e is an integer of 0 to 18, and
the structural elements indicated by the indices a, b and c in the siloxane structure are freely permutable and may be present either in random distribution or in blocks,
with the proviso that the epoxy-functional (poly)organosiloxane compounds of the general formula (I) used are those in which the X radical corresponds to the fragment (II) only in one case and is otherwise equivalent to the R radical,
wherein one or more epoxy-functional siloxane monomers of the formula (I), individually or in a mixture with further epoxy compounds of the formula (III) 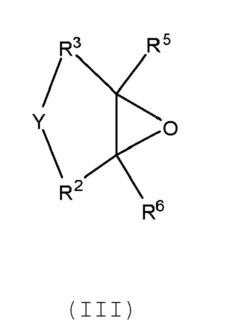 or (IV) 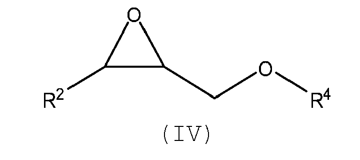 in which at least one glycidyloxypropyl group is bonded via an ether or ester function R⁴ to a linear or branched alkyl radical of 1 to 24 carbon atoms, an aromatic or cycloaliphatic radical,
are added either blockwise or randomly onto a chain starter of the formula (V) with at least one reactive hydrogen and the organosiloxane monomer which bear at least one epoxy group may either be scattered randomly in the polymer chain or be arranged in chain terminal positions in the polymer skeleton.

6. Process according to Claim 5, **characterized in that** the starters R¹-H (V) used are hydrocarbon compounds whose carbon skeleton may be interrupted by oxygen atoms and which have molar masses of 50 to 10 000 g/mol and have 1 to 8 aliphatic, cycloaliphatic or phenolic hydroxyl groups.

7. Process according to Claim 6, **characterized in that** allyl alcohol, butanol, octanol, dodecanol, stearyl alcohol, 2-ethylhexanol, cyclohexanol, benzyl alcohol, ethylene glycol, propylene glycol, di-, tri- and polyethylene glycol, 1,2-propylene glycol, di- and polypropylene glycol, low molecular weight polyetherols having 1-8 hydroxyl groups and molar masses of 50 to 2000 g/mol, 1,4-butanediol, 1,6-hexanediol, trimethylolpropane, glycerol, pentaerythritol, sorbitol, cellulose sugar, lignin, phenol, alkyl- and arylphenols, bisphenol A and novolacs, or else further compounds which bear hydroxyl groups and are based on natural substances, alone or in a mixture with one another, are used as starters R¹-H (V).

8. Process according to at least one of Claims 5 to 7, **characterized in that** the reaction is carried out in one inert solvent or in mixtures of a plurality of inert solvents.

9. Process according to at least one of Claims 5 to 7, **characterized in that** the solvent or suspension medium used for the DMC catalyst is the starter R¹-H (V).

10. Process according to at least one of Claims 5 to 9, **characterized in that** the molar ratio of the sum of the epoxides metered in, including the epoxides already added in the start phase, based on the starter compound used, more particularly based on the number of OH groups of the starter compound used, is 1 to 10⁵:1.

11. Process according to at least one of Claims 5 to 10, **characterized in that** the reaction is effected batchwise or continuously.

12. Process according to at least one of Claims 5 to 11, **characterized in that** the DMC catalyst concentration is greater than 0 to 2000 ppmw based on the total mass of the alkoxylation products formed.

13. Process according to Claim 12, **characterized in that** the catalyst is metered in in solid form or in the form of a catalyst suspension.

14. Use of polyethersiloxanes according to Claims 1 to 4 as polyurethane foam stabilizers, wetting agents, dispersing additives, devolatilizers or defoamers.

## Revendications

1. Polyéthersiloxanes de formule (VI), 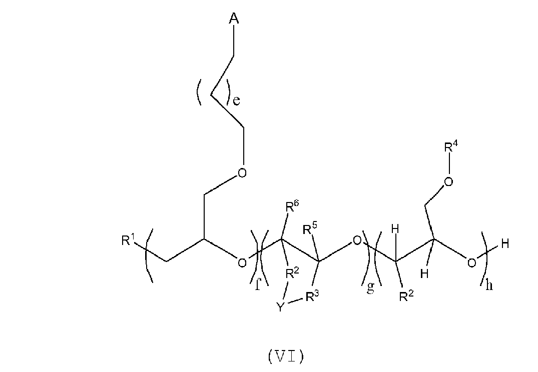 le fragment A correspondant à l'élément de structure de formule (VIa) 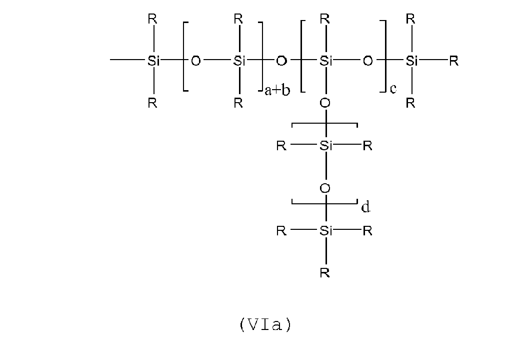 ou à l'élément de structure de formule (VIb) 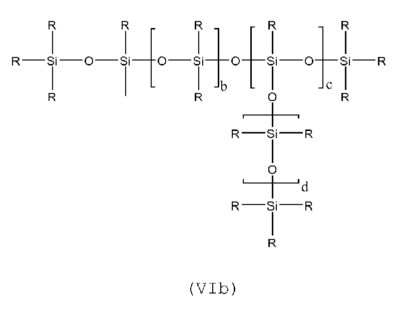 et
R correspond à un ou plusieurs radicaux identiques ou différents, choisis parmi les radicaux, linéaires ou ramifiés, saturés, monoinsaturés ou polyinsaturés, alkyle, aryle, alkylaryle ou arylalkyle comprenant 1 à 40 atomes de carbone, halogénoalkyle comprenant 1 à 20 atomes de carbone,
R¹ correspond à un radical saturé ou insaturé, le cas échéant ramifié ou représente un radical polyéther du type groupe alcoxy, arylalcoxy ou alkylarylalcoxy, dans lequel la chaîne carbonée peut être interrompue par des atomes d'oxygène, ou R¹ signifie un groupe aromatique monoannelé ou polyannelé, auquel est lié directement un groupe OH phénolique,
R² ou R³, ainsi que R⁵ ou R⁶ représentent, de manière identique ou également indépendamment l'un de l'autre, H ou un radical hydrocarboné, saturé ou le cas échéant monoinsaturé ou polyinsaturé, également substitué davantage, le cas échéant monovalent ou polyvalent, où, pour les radicaux R⁵ ou R⁶, il est vrai qu'ils représentent un radical hydrocarboné monovalent, le radical hydrocarboné pouvant former un pont cycloaliphatique via le fragment Y ; Y peut être absent ou encore représenter un pont méthylène comprenant 1 ou 2 unités méthylène, si Y représente 0, R² ou R³ représentent, indépendamment l'un de l'autre, un radical linéaire ou ramifié comprenant 1 à 20 atomes de carbone, les radicaux hydrocarbonés R² et R³ pouvant à leur tour être à nouveau substitués davantage et porter des groupes fonctionnels tels que des halogènes, des groupes hydroxyle ou des groupes glycidyloxypropyle,
R⁴ représente une fonction éther ou ester, qui est liée à un radical alkyle linéaire ou ramifié comprenant 1 à 24 atomes de carbone, un radical aromatique ou cycloaliphatique,
et indépendamment l'un de l'autre :
a vaut un nombre entier de 0 à 5,
b vaut un nombre entier de 0 à 500,
c vaut un nombre entier de 0 à 50,
d vaut un nombre entier de 0 à 200,
e vaut un nombre entier de 0 à 18 et
les éléments de structure **caractérisés par** les indices a, b et c dans la structure siloxane sont permutables de manière quelconque et peuvent se trouver sous forme statistiquement répartie que sous forme de blocs,
f vaut un nombre entier de 1 à 200,
g vaut un nombre entier jusqu'à 10 000,
h vaut un nombre entier de 0 à 1000,
à condition que les fragments portant les indices f, g et h soient librement permutables entre eux et soient donc remplaçables les uns par les autres dans la séquence dans la chaîne polyéther et les différentes unités monomères portant les nombres d'indice f, g et h se trouvent sous forme de blocs ou puissent également se trouver avec une répartition statistique,
à condition que le fragment portant l'indice g soit présent en un excès molaire par rapport au fragment portant l'indice f.

2. Polyéthersiloxanes selon la revendication 1, qui sont exempts de polyéthers en excès.

3. Polyéthersiloxanes selon la revendication 1 ou 2, qui sont exempts de composés de formule (VI) avec f valant zéro.

4. Polyéthersiloxanes selon l'une quelconque des revendications ci-dessus, préparés selon un des procédés selon les revendications 5 à 13.

5. Procédé pour la préparation de polyéthersiloxanes selon la revendication 1 à 3 par polymérisation avec alcoxylation de (poly)organosiloxanes portant des groupes époxyde, partant d'un initiateur R¹-H (V) avec de l'hydrogène réactif sous une catalyse par DMC, **caractérisé en ce qu'**on utilise comme (poly)organosiloxanes à fonctionnalité époxyde des composés de formule générale (I), 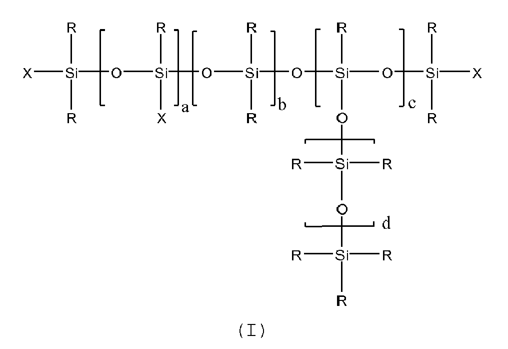 où
X correspond, indépendamment l'un de l'autre, à R ou à un fragment portant des groupes époxyde de formule (II) 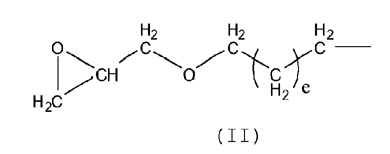
et indépendamment l'un de l'autre
a vaut un nombre entier de 0 à 5,
b vaut un nombre entier de 0 à 500,
c vaut un nombre entier de 0 à 50,
d vaut un nombre entier de 0 à 200,
e vaut un nombre entier de 0 à 18 et
les éléments de structure **caractérisés par** les indices a, b et c dans la structure siloxane sont permutables de manière quelconque et peuvent se trouver sous forme statistiquement répartie que sous forme de blocs,
à condition qu'on utilise comme (poly)organosiloxanes à fonctionnalité époxyde des composés de formule générale (I) dans lesquels le radical X ne correspond que dans un cas au fragment (II) et est pour le reste équivalent au radical R,
où un ou plusieurs monomères siloxane à fonctionnalité époxyde selon la formule (I), seuls ou en mélange avec d'autres composés époxyde des formules (III) 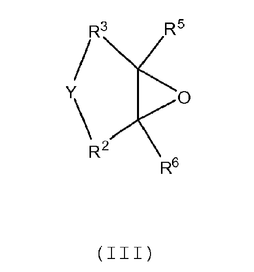 ou (IV) 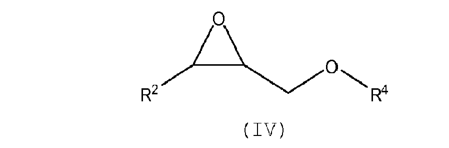 dans lesquels au moins un groupe glycidyloxypropyle est lié via une fonction éther ou ester R⁴ à un radical alkyle linéaire ou ramifié comprenant 1 à 24 atomes de carbone, un radical aromatique ou cycloaliphatique, sont ajoutés au choix sous forme de blocs ou statistiquement sur un initiateur de chaîne de formule (V) présentant au moins un hydrogène réactif et les monomère organosiloxane portant au moins un groupe époxyde sont répartis de manière quelconque dans la chaîne polymère ou disposés aux extrémités des chaînes dans la structure polymère.

6. Procédé selon la revendication 5, **caractérisé en ce qu'**on utilise comme initiateur R¹-H (V) des composés hydrocarbonés, dont la structure carbonée peut être interrompue par des atomes d'oxygène, présentant des masses molaires de 50 à 10 000 g/mole et 1 à 8 groupes hydroxyle aliphatiques, cycloaliphatiques ou phénoliques.

7. Procédé selon la revendication 6, **caractérisé en ce qu'**on utilise l'alcool allylique, le butanol, l'octanol, le dodécanol, l'alcool stéarylique, le 2-éthylhexanol, le cyclohexanol, l'alcool benzylique, l'éthylèneglycol, le propylèneglycol, le diéthylèneglycol, le triéthylèneglycol et le polyéthylèneglycol, le 1,2-propylèneglycol, le dipropylèneglycol et le polypropylèneglycol, des polyétherols de bas poids moléculaire, comprenant 1-8 groupes hydroxyle et présentant des masses molaires de 50 à 2000 g/mole, le 1,4-butanediol, le 1,6-hexanediol, le triméthylolpropane, le glycérol, le pentaérythritol, le sorbitol, les sucres de cellulose, la lignine, le phénol, des alkylphénols et des arylphénols, le bisphénol A et des novolaques ou également d'autres composés portant des groupes hydroxyle à base de substances naturelles, seuls ou en mélange, comme initiateur R¹-H (V).

8. Procédé selon au moins l'une quelconque des revendications 5 à 7, **caractérisé en ce que** la réaction est réalisée dans un solvant inerte ou dans des mélanges de plusieurs solvants inertes.

9. Procédé selon au moins l'une quelconque des revendications 5 à 7, **caractérisé en ce qu'**on utilise, comme solvant ou agent de mise en suspension pour le catalyseur à base de DMC, l'initiateur R¹-H (V).

10. Procédé selon au moins l'une quelconque des revendications 5 à 9, **caractérisé en ce que** le rapport molaire de la somme des époxydes dosés, y compris les époxydes déjà ajoutés dans la phase de départ, par rapport au composé de départ utilisé, en particulier par rapport au nombre de groupes OH du composé de départ utilisé, vaut 1 à 10⁵:1.

11. Procédé selon au moins l'une quelconque des revendications 5 à 10, **caractérisé en ce que** la réaction a lieu par lots ou en continu.

12. Procédé selon au moins l'une quelconque des revendications 5 à 11, **caractérisé en ce que** la concentration en catalyseur à base de DMC est supérieure à 0 jusqu'à 2000 ppm en poids par rapport à la masse totale des produits d'alcoxylation formés.

13. Procédé selon la revendication 12, **caractérisé en ce que** le catalyseur est dosé comme solide ou sous forme d'une suspension de catalyseur.

14. Utilisation de polyéthersiloxanes selon la revendication 1 à 4 come stabilisateurs de mousse de polyuréthane, mouillants, additifs de dispersion, agents de désaération ou antimousses.
